# FASCICULE DE BREVET EUROPEEN

(11) **EP 3 564 026 B1**
(45) Date de publication et mention de la délivrance du brevet: **19.01.2022**
(21) Numéro de dépôt: 19171954.1
(22) Date de dépôt: 30.04.2019
(51) Int. Cl.: B32B 5/02, B32B 7/12, B32B 15/14, B32B 15/20, B32B 37/08, B32B 37/12

(54) **PROCEDE DE FABRICATION D'UN TEXTILE TECHNIQUE ASSOCIANT UN SUPPORT TEXTILE SOUPLE ET UNE FEUILLE METALLIQUE ET PRODUIT TEXTILE OBTENU PAR LA MISE EN OEUVRE DE CE PROCEDE**
HERSTELLUNGSVERFAHREN EINER TECHNISCHEN TEXTILIE, BEI DEM EINE WEICHE TEXTILUNTERLAGE UND EINE METALLFOLIE KOMBINIERT WERDEN, UND DURCH DIE UMSETZUNG DIESES VERFAHRENS ERHALTENES TEXTILPRODUKT
METHOD FOR MANUFACTURING A TECHNICAL TEXTILE COMBINING A FLEXIBLE TEXTILE SUPPORT AND A METAL SHEET AND TEXTILE PRODUCT OBTAINED BY THE IMPLEMENTATION OF SAID METHOD

(30) Priorité: 30.04.2018 FR 1870509
(43) Date de publication de la demande: 06.11.2019
(73) Titulaire: Formit Technologie, 68520 Burnhaupt-le-Haut (FR)
(72) Inventeur: Edelmann, Stephan, 68520 Burnhaupt-le-Haut (FR)
(74) Mandataire: Burkard, Thierry

(56) Documents cités:
- FR-A1- 2 413 971
- FR-A3- 2 617 430
- GB-A- 2 431 374
- US-A- 5 855 980

## Description

L'invention concerne un procédé de fabrication d'un textile technique renforcé, plus particulièrement destiné au domaine de l'ameublement, de la décoration, de l'événementiel et de la scénographie. Le but de l'invention est de réaliser un matériau textile renforcé résistant présentant des caractéristiques de souplesse lui permettant de prendre tout type de forme tout en soutenant des charges très élevées. L'invention concerne également le produit textile obtenu par la mise en œuvre du procédé selon l'invention.

Le procédé de l'invention ainsi que le produit textile obtenu par la mise en œuvre du procédé sont définis respectivement aux revendications indépendantes 1 et 5. Plus particulièrement, le procédé selon la présente invention a pour objet la réalisation d'un support textile technique qui puisse être manipulé à volonté, avec la possibilité d'en varier la forme ou l'aspect extérieur, notamment les couleurs et la décoration, avec une surface externe susceptible de recevoir toutes sortes de traitement artistique ultérieur, par chauffage, pliage/dépliage, découpe, peinture ou impression. Le but est également de définir un procédé permettant de réaliser un tel matériau avec au final un produit malléable et modifiable, résistant aux contraintes ou à l'eau, tout en étant ininflammable.

Dans ce but, le procédé selon l'invention est basé sur la combinaison d'un support textile souple et d'une feuille métallique rendue malléable.

L'association de supports textile et métallique dans un but de renforcement ou d'isolation est connue de l'art antérieur.

Ainsi, le document GB2431374 décrit un patin adhésif destiné à permettre d'associer entre elles des couches métalliques ou de les renforcer. Ce patin comprend une couche fibreuse d'une épaisseur d'au moins 3 mm, associant des fibres métalliques et des fibres polymères, et dont l'une des faces au moins reçoit une couche adhésive conçue pour permettre un contact électrique entre la couche fibreuse et un substrat métallique collé à cette couche adhésive. Cette solution n'est cependant pas adaptée ni transposable au problème que se propose de résoudre l'invention, car le patin décrit n'est qu'un élément de jonction ou de renfort, tendant uniquement à fixer entre elles des surfaces métalliques de manière permanente, ou à les renforcer, sans que ne soit envisagée ni suggérée une utilisation comme support autonome modulable et modifiable, par exemple pour la réalisation de décors.

L'art antérieur connaît également des associations textile/métal à des fins d'isolation. Par exemple, les documents FR2413971, US5855980 et FR2617430 décrivent des matériaux d'isolation constitués de deux feuilles d'aluminium enserrant une âme en non-tissé. Mais ceci ne permet pas de répondre au problème que cherche à résoudre l'invention, car les procédés décrits permettent d'obtenir un matériau résistant, mais rigide, et donc ne présentant pas la souplesse requise pour réaliser des formes malléables et modifiables, la couche textile étant contrainte sur ses deux faces par une couche métallique.

Le procédé selon l'invention est caractérisé par les étapes successives suivantes.

Dans une première étape, on positionne sur un banc de travail une certaine longueur d'une bande de support homogène, uniquement en textile tissé ou non tissé.

Le procédé selon l'invention est en effet applicable à tout type de support textile, tissé ou non-tissé, de toute dimension, sans que cela ne modifie les caractéristiques et les qualités du produit fini, et sans avoir à mélanger fibres textile et non textile.

Dans une deuxième étape, on appose une colle sur toute la surface apparente du support textile positionné sur le banc de travail. La colle est déposée sur le support au moyen d'un cylindre hélicoïdal, à raison de 30 à 40 grammes par mètre carré, de manière à former une pellicule homogène et uniforme sur toute la surface du support. La colle utilisée est de type polyuréthanne réactif. Ce type de colle présente l'avantage de résister parfaitement à l'humidité et aux écarts de température et d'avoir une excellente tenue dans le temps. Cette colle présente également l'avantage de bien résister aux solvants, ainsi qu'aux forces de traction, aux cisaillements, aux chocs ou aux vibrations. Elle présente une élasticité et une souplesse importante et sèche rapidement sans dégager d'odeur après avoir été apposée à chaud. Les essais et recherches qui ont été effectués ont montré que c'est avec ce type de colle que le procédé selon l'invention apportait les meilleurs résultats.

Dans une troisième étape, on positionne une feuille métallique sur la bande textile qui a été préencollée lors de l'étape précédente. L'ordre de ces deux étapes au sein du procédé selon l'invention a son importance : le choix d'encoller d'abord le support textile puis seulement ensuite d'appliquer la feuille métallique permet d'obtenir au final une meilleure tenue car le support textile va absorber 100% de la colle, ce qui ne serait pas le cas si la colle était déposée sur la feuille métallique avant que celle-ci ne soit appliquée sur le support textile.

Il s'agit d'une feuille en aluminium. L'aluminium a été préféré à tout autre type de métal pour sa légèreté due à sa faible densité. A titre de comparaison, une feuille à base d'acier aurait une densité trois fois plus élevée. Par ailleurs, bien que léger, l'aluminium présente une forte résistance à la traction et sa résistance augmente à basse température. Enfin, l'aluminium présente d'excellentes performances en terme de ductilité. L'ensemble de ces paramètres le rend particulièrement adapté au traitement prévu selon le procédé de l'invention. L'épaisseur de la feuille métallique sera de manière avantageuse comprise entre 60 et 120 microns, et préférentiellement de 80 microns. Il a en effet été constaté lors des études et essais qui ont été effectués que c'est dans cette fourchette d'épaisseur que l'on obtenait les meilleurs résultats, c'est-à-dire une meilleure tenue du produit fini avec la souplesse recherchée compte tenu de l'utilisation projetée et des matériaux et matières définies.

Le procédé selon l'invention peut encore être optimisé en utilisant une feuille en aluminium recuit, c'est-à-dire ayant subi un traitement thermique destiné à modifier les propriétés mécaniques du matériau d'origine, pour en améliorer la malléabilité.

Dans une quatrième étape, on applique une source de chaleur sur l'ensemble formé par la superposition de la bande textile et de la feuille métallique pour provoquer la réaction de la colle polyuréthanne. La température appliquée devra au moins être de 110 degrés Celsius, sans dépasser 140 degrés Celsius.

Dans une cinquième étape, on applique une pression sur ledit ensemble par des moyens de type connu. La pression à chaud devra être maintenue de manière constante pendant au moins 5 secondes.

Les essais et recherches effectués ont permis de constater qu'en deçà de ces paramètres, le but poursuivi par l'invention n'était pas atteint, la réaction de la colle n'étant pas totale et la bande textile et la feuille métallique n'étant pas totalement solidarisées l'une par rapport à l'autre.

Dans une sixième étape, et après refroidissement naturel de l'ensemble, on procède à l'enroulement sur un mandrin du produit final obtenu, en positionnant la face métallique vers l'intérieur pour minimiser les contraintes avant stabilisation définitive du produit.

Enfin, dans une septième et dernière étape, on conserve le produit obtenu enroulé sur son mandrin dans une zone de séchage à froid. La température de séchage est de préférence de l'ordre de 37 degrés Celcius, avec un taux d'humidité élevé, de préférence d'au moins 75%. En effet, une température trop élevée, comme par exemple dans le cas d'un séchage à chaud, pourrait provoquer une modification de structure du film de colle. Là également, les essais et recherches effectués ont permis de constater qu'en dehors de ces paramètres, le but poursuivi par l'invention n'était pas atteint.

Ces mêmes essais et recherches ont permis de vérifier que le produit final pouvait prendre tout type de forme tout en soutenant de fortes charges, de l'ordre de plusieurs centaines de kilos.

## Revendications

1. Procédé de fabrication d'un textile technique associant un support textile souple et une feuille métallique, **caractérisé en ce qu'**il comporte les étapes suivantes :
- on positionne sur un banc de travail une certaine longueur d'une bande de support homogène, uniquement en textile tissé ou non tissé,
- puis on appose une colle de type polyuréthanne réactif sur toute la surface apparente du support textile positionné sur le banc de travail,
- puis on positionne une feuille métallique en aluminium sur la bande textile ainsi préencollée,
- puis on applique à l'ensemble obtenu une source de chaleur sous une température comprise entre 110 et 140 degrés Celsius,
- puis on applique une pression à chaud, sur l'ensemble formé par la superposition de la bande textile et de la feuille métallique, pendant au moins 5 secondes,
- puis on procède après refroidissement naturel de l'ensemble à l'enroulement du produit obtenu sur un mandrin, en positionnant la face métallique vers l'intérieur,
- enfin, on conserve le produit obtenu enroulé sur son mandrin dans une zone de séchage à froid, sous une température de l'ordre de 37 degrés Celcius avec un taux d'humidité d'au moins 75%.

2. Procédé selon la revendication 1, **caractérisé en ce que** la feuille métallique est en aluminium recuit.

3. Procédé selon l'une des revendications précédentes, **caractérisé en ce que** l'épaisseur de la feuille métallique est comprise entre 60 et 120 microns.

4. Procédé selon la revendication 3, **caractérisé en ce que** l'épaisseur de la feuille métallique est de 80 microns.

5. Produit textile obtenu par la mise en oeuvre du procédé selon l'une quelconque des revendications précédentes, **caractérisé en ce qu'**il est composé d'une bande de support homogène, uniquement en textile tissé ou non tissé, associée à une feuille en aluminium au moyen d'une colle en polyuréthanne réactif, une pression à chaud étant appliquée à l'ensemble avant enroulement sur un mandrin et maintien dans une zone de séchage à froid.

## Patentansprüche

1. Verfahren zur Herstellung einer technischen Textilie, bei der eine weiche Textilunterlage und eine Metallfolie kombiniert werden, **dadurch gekennzeichnet, dass** es die folgenden Schritte umfasst:
- Auf einer Werkbank wird ein Streifen von bestimmter Länge einer homogenen Unterlage positioniert, die nur aus gewebtem Stoff oder Vliesstoff besteht,
- dann wird ein Klebstoff vom Typ reaktives Polyurethan auf die gesamte sichtbare Oberfläche der auf der Werkbank positionierten Textilunterlage aufgetragen,
- dann wird eine Metallfolie aus Aluminium auf dem so vorgeklebten Textilstreifen positioniert,
- dann wird die erhaltene Anordnung einer Wärmequelle bei einer Temperatur zwischen 110 und 140 Grad Celsius ausgesetzt,
- dann wird mindestens 5 Sekunden lang ein heißer Druck auf die Anordnung, die aus der Überlagerung des Textilstreifens und der Metallfolie besteht, ausgeübt,
- dann wird nach dem natürlichen Abkühlen der Anordnung das erhaltene Produkt auf einen Dorn gewickelt, wobei die Metallseite nach innen positioniert wird,
- schließlich bewahrt man das erhaltene, auf seinen Dorn gewickelte Produkt in einer Kalttrocknungszone bei einer Temperatur von etwa 37 Grad Celsius mit einem Feuchtigkeitsgehalt von mindestens 75 % auf.

2. Verfahren nach Anspruch 1, **dadurch gekennzeichnet, dass** die Metallfolie aus geglühtem Aluminium besteht.

3. Verfahren nach einem der vorhergehenden Ansprüche, **dadurch gekennzeichnet, dass** die Stärke der Metallfolie zwischen 60 und 120 Mikrometer beträgt.

4. Verfahren nach Anspruch 3, **dadurch gekennzeichnet, dass** die Stärke der Metallfolie 80 Mikrometer beträgt.

5. Textilprodukt, das durch die Durchführung des Verfahrens nach einem der vorhergehenden Ansprüche erhalten wird, **dadurch gekennzeichnet, dass** es aus einem Streifen einer homogenen Unterlage besteht, die nur aus gewebtem Stoff oder Vliesstoff besteht und mittels eines Klebstoffs aus reaktivem Polyurethan mit einer Aluminiumfolie verbunden ist, wobei auf die Anordnung ein heißer Druck ausgeübt wird, bevor es auf einen Dorn gewickelt und in einer Kalttrocknungszone aufbewahrt wird.

## Claims

1. Method for manufacturing a technical textile combining a flexible textile support and a metal foil, **characterised in that** it comprises the successive steps of:
- positioning on a work bench a certain length of a homogeneous textile support strip exclusively in woven or non-woven fabric,
- then applying an adhesive of reactive polyurethane type over the entire visible surface of the textile support positioned on said work bench,
- then positioning a metal aluminium foil on the pre-glued textile strip,
- then applying a heat source to the device obtained at a temperature between 110 and 140 degrees Celsius,
- then applying hot pressure for at least 5 seconds to the device formed by the overlaying of the textile strip and the metal foil,
- then wounding on a mandrel the product obtained after natural cooling of the device with the metal foil inwards,
- then keeping the product obtained wound on its mandrel in a cold drying zone, at a temperature of around 37 degrees Celsius and a moisture level of at least 75 %.

2. Method according to claim 1, **characterised in that** the metal foil is a foil of annealed aluminium.

3. Method according to anyone of the preceding claims, **characterised in that** the thickness of the metal foil is about 60-120 microns.

4. Method according to claim 3, **characterised in that** the metal foil is 80 micron thick.

5. Textile product obtained by the implementation of the method according to anyone of the preceding claims, **characterised in that** it is made of a homogeneous textile support strip exclusively in woven or non-woven fabric combined with an aluminium foil by means of a reactive polyurethane adhesive, a hot pressure being applied to the combination before it is wound on a mandrel and kept in a cold drying zone.
